(19) Europäisches Patentamt / European Patent Office / Office européen des brevets

(11) **EP 2 526 429 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
*G01P 3/48* (2006.01)    *G01P 3/488* (2006.01)
*G01P 13/00* (2006.01)    *G01P 13/04* (2006.01)
*G01F 1/075* (2006.01)    *G01D 5/20* (2006.01)

(21) Anmeldenummer: **10795256.6**

(22) Anmeldetag: **21.12.2010**

(86) Internationale Anmeldenummer:
**PCT/EP2010/007838**

(87) Internationale Veröffentlichungsnummer:
**WO 2011/088880 (28.07.2011 Gazette 2011/30)**

(54) **VERFAHREN ZUM DETEKTIEREN DER ROTATION UND DREHRICHTUNG EINES ROTORS**

METHOD FOR DETECTING THE ROTATION AND DIRECTION OF ROTATION OF A ROTOR

PROCÉDÉ POUR DÉTECTER LA ROTATION ET LE SENS DE ROTATION D'UN ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2010 DE 102010005231**

(43) Veröffentlichungstag der Anmeldung:
**28.11.2012 Patentblatt 2012/48**

(73) Patentinhaber: **Sensus Spectrum LLC**
**Raleigh, NC 27615 (US)**

(72) Erfinder: **BAUMANN, Joachim**
**67165 Waldsee (DE)**

(74) Vertreter: **Patentanwälte Dr. Keller, Schwertfeger**
**Westring 17**
**76829 Landau (DE)**

(56) Entgegenhaltungen:
**EP-A1- 0 898 152    EP-A2- 0 608 494**
**DE-A1- 19 725 806    US-A1- 2008 142 346**
**US-B1- 7 263 453**

**Beschreibung**

Technisches Gebiet:

Die Erfindung betrifft Verfahren zum Detektieren der Drehrichtung und der Drehrichtung eines Rotors gemäß dem Oberbegriff des Anspruchs 1.

Stand der Technik:

Verfahren und zur Durchführung der Verfahren geeignete Vorrichtungen zum Zählen der Rotationen eines Rotors, beispielsweise eines Zeigers oder einer Scheibe im Messwerk eines Verbrauchszählers, sind in zahlreichen Varianten bekannt und handelsüblich. So zeigt beispielsweise die DE 33 40 508 C2 eine Impulsgebereinrichtung für Wasserzähler mit serienmäßigem Zeiger-Rollen-Zählwerk. Auf einer Trägerscheibe ist ein Permanentmagnet als Impulssender montiert. Ein außerhalb des Zählwerkgehäuses angeordneter Impulsaufnehmer gibt bei jedem Vorbeilauf des Permanentmagneten einen Zählimpuls ab. Eine vergleichbare Anordnung ist Gegenstand der DE 100 60 198 A1. Diese Art Impulsgebereinrichtung hat sich jedoch in der Praxis nicht bewährt, weil nicht unterschieden werden kann, ob das Zählwerk vorwärts oder rückwärts läuft. Sehr große Fehler entstehen, wenn der Impulssender vor dem Impulsaufnehmer pendelt; dann werden ständig Zählimpulse erzeugt, obwohl das Zählwerk weder vorwärts noch rückwärts eine Umdrehung vollendet hat.

In der Praxis weit verbreitet ist die Verwendung von induktiven Näherungssensoren, die einen durch Annähern eines elektrisch leitenden Gegenstandes bedämpfbaren LC-Schwingkreis und eine Auswerteschaltung zur Ermittlung der durch das Dämpfungsglied hervorgerufenen Schwingungsdämpfung verwenden. Dabei wird der LC-Schwingkreis im Rhythmus einer Abtastfrequenz periodisch zu Resonanzschwingungen angeregt. Anschließend wird die Zeit gemessen, bis die Amplitude der Resonanzschwingungen unter eine zuvor festgelegte Schwelle gesunken ist. Befindet sich das Dämpfungselement im Erfassungsbereich des Sensors, ist die Ausschwingzeit kurz, befindet sich das Dämpfungselement außerhalb des Erfassungsbereiches, ist die Ausschwingzeit lang. Befindet sich das Dämpfungselement teilweise im Erfassungsbereich des Sensors, so liegt die Ausschwingzeit zwischen diesen beiden Extremen; die Entscheidung, ob das Dämpfungselement innerhalb oder außerhalb des Erfassungsbereichs liegt, wird durch eine zusätzlich eingeführte Schaltschwelle erreicht.

Einzelheiten hierzu zeigen folgende Schriften: DE 36 11 862 A1, DE 37 33 943 A1, DE 37 33 944 C2, EP 0 608 494 B1, EP 0 467 753 B1, DE 39 23 398 C1 und DE 19 809 031 A1.

Eine weitere Eigenschaft der bekannten Verfahren und Vorrichtungen ist die Zahl der verwendeten Sensoren. So zeigen beispielsweise die DE 37 33 943 A1 und die DE 37 33 944 C2 Verfahren und Vorrichtungen, die nur einen Sensor verwenden. Ebenfalls nur einen Sensor, der zusätzlich als Transformator ausgebildet ist, zeigt die DE 36 11 862 A1.

Die EP 0 608 494 B1 zeigt einen Umdrehungsdetektor, der mit einem Messsensor, einem Referenzsensor und einem Rotor mit drei unterschiedlichen Dämpfungseigenschaften arbeitet.

Die EP 0 467 753 B1 zeigt eine Vorrichtung zur Rotationserkennung, welche mit zwei und mehr Messsensoren arbeitet, wobei die Sensoren nacheinander zugeschaltet werden. Dadurch soll das induktive Übersprechen zwischen den Sensoren, welches Störungen verursachen kann, vermieden werden.

Die DE 39 23 398 C1 zeigt einen Umdrehungsdetektor für Batteriebetrieb, der sogar mit vier Sensoren arbeitet, von denen jeweils zwei komplementär zueinander geschaltet sind. Da die Anregung von vier LC-Schwingkreisen naturgemäß mehr Batteriestrom verbraucht als die Anregung von ein oder zwei Sensoren, lässt sich diese Schaltung nur mit einer großen Batterie oder nur für kurze Zeit betreiben.

Die DE 198 09 031 A1 zeigt, dass es möglich ist, drei Spulen, die jeweils mit einem Kondensator zu einem LC-Schwingkreis ergänzt werden sollen, als gedruckte Schaltung herzustellen.

Für den Verbrauch an Batteriestrom ist nicht zuletzt die Abtastfrequenz entscheidend. Je höher die Abtastfrequenz ist, das heißt je öfter pro Zeiteinheit die Schwingkreise angeregt werden, desto höher ist der Batterieverbrauch. Zur Reduzierung des Batteriestroms sollte die Abtastfrequenz möglichst niedrig sein. Allerdings darf das Shannon-Theorem nicht verletzt werden. Das Shannon-Theorem besagt, dass zur sicheren Erkennung der Rotordrehung für jede Umdrehung mehr als zwei Abtastungen erfolgen müssen. Daraus folgt, dass die Abtastfrequenz auf die höchste zu erwartende Drehzahl abgestimmt werden muss, obwohl die Maximaldrehzahl selten oder nie erreicht wird.

Zur Reduzierung des Batterieverbrauchs in diesen Fällen ist aus der EP 0 898 152 A1 bekannt, die Abtastfrequenz adaptiv zu verändern. Bei Stillstand des Rotors wird die Abtastfrequenz stufenweise abgesenkt, sobald sich der Rotor wieder dreht, wird die maximale Abtastfrequenz wieder hergestellt. Da die Elektronik jedoch das Wiederanlaufen des Rotors erst erkennt, wenn dieser wenigstens eine viertel Drehung vollendet hat, kann es zu Fehlmessungen kommen, bis die volle Abtastfrequenz wieder erreicht ist.

Werden zwei Sensoren verwendet, um die Umdrehungen einer Scheibe, die zur Hälfte mit einem Dämpfungselement belegt ist, zu erfassen, sind die beiden Sensoren gegeneinander um π/2 versetzt. Mit Hilfe der oben erwähnten Schaltschwelle wird detektiert, ob sich das Dämpfungselement vor dem Sensor befindet oder nicht. Jeder Sensor gibt somit zwei Signale ab: bedämpft bzw. unbedämpft. Daraus lassen sich vier Zustände ermitteln, entsprechend den vier Quadranten der Scheibe. Durch Vergleichen der aufeinanderfolgenden Signalzustände lässt sich detektieren, ob die Scheibe sich jeweils um π/2 vorwärts oder rückwärts gedreht hat. Nach Abzählen von vier aufeinanderfolgenden Vorwärtsbewegungen wird eine volle Umdrehung vorwärts, nach Abzählen von vier aufeinanderfolgenden Rückwärtsbewegungen wird eine volle Umdrehung rückwärts detektiert.

Der wesentliche Nachteil dieser Schaltungsanordnungen ist die Unsicherheit der Entscheidung "bedämpft" bzw. "unbedämpft", wenn sich nur die Kante des Dämpfungselements im Bereich des Sensorerfassungsbereichs befindet. Hinzu kommt die generelle Ungenauigkeit bei der Erfassung der momentanen Ausschwingzeit, bedingt durch die Ungenauigkeit beim Messen der Schwingungsamplituden und der Entscheidung, ob die aktuelle Amplitude über oder unter der Amplitudenschwelle liegt. Weitere Fehlerquellen sind das Rauschen, z. B. das Quantisierungsrauschen, und die Veränderungen der Sensoren aufgrund von Alterung. Dies alles hat zur Folge, dass die Abtastfrequenz in der Praxis weitaus höher angesetzt werden muss als es das Abtasttheorem von Shannon verlangt. Dies ist mit einem entsprechend erhöhten Batterieverbrauch verbunden. Das ist nachteilig.

Darstellung der Erfindung:

Der vorliegenden Erfindung liegt die Aufgabe zugrunde, ein Verfahren zum genaueren Detektieren der Drehrichtung und der Drehung von Rotoren bei gleichzeitig verringertem Energieverbrauch anzugeben.

Diese Aufgabe wird gelöst durch Verfahren mit den Merkmalen des Anspruchs 1.

Das erfindungsgemäße Verfahren verzichtet auf die bisher übliche Entscheidung "bedämpft" bzw. "unbedämpft". Statt dessen werden die gemessenen Ausschwingzeiten direkt verarbeitet. Um jedoch Ungenauigkeiten durch Sensoren mit voneinander abweichenden Eigenschaften, durch unterschiedliche Alterungsvorgänge usw. zu vermeiden, werden die Sensoren bzw. deren Ausschwingzeiten zunächst normiert, indem der maximalen, unbedämpften Ausschwingzeit der Wert +1, der minimalen, bedämpften Ausschwingzeit der Wert -1 zugeordnet wird, so dass die in Betrieb gemessenen tatsächlichen Ausschwingzeiten, auf die dieselben Normierungsregeln angewendet werden, in dem Bereich zwischen +1 und -1 liegen, abhängig davon, wie weit das Dämpfungselement sich im Erfassungsbereich der Sensoren befindet. Aus den gemessenen und normierten Ausschwingzeiten der Sensoren wird ein Vektor gebildet in einem zweidimensionalen Koordinatensystem, dessen Achsen im selben Winkel zueinander stehen wie die Achsen der Sensoren. Soll, wie überwiegend üblich, die Umdrehung einer Scheibe, die zur Hälfte mit einem Dämpfungsblech belegt ist, mit Hilfe von zwei Sensoren, die im rechten Winkel zueinander angeordnet sind, detektiert werden, so wird der Vektor in ein zweidimensionales rechtwinkliges Koordinatensystem eingetragen, ausgehend von dessen Nullpunkt. In diesem Koordinatensystem rotiert der Vektor von Messung zu Messung in der selben Geschwindigkeit und in der selben Richtung wie der überwachte Rotor. Damit ist zu jedem Abtastzeitpunkt die aktuelle Winkelposition des überwachten Rotors bekannt, nicht nur wie bisher die mehr oder weniger genaue Vollendung einer Drehung um π/2.

Aufgrund der Tatsache, dass die jeweilige Winkelposition des überwachten Rotors genau bekannt ist, kann durch Vergleichen der aufeinanderfolgenden Winkelpositionen sehr viel sicherer bestimmt werden, ob sich der Rotor dreht, in welche Richtung er sich dreht und wann eine volle Umdrehung vorwärts oder rückwärts vollendet ist. Dank dieser erhöhten Auflösung jeder einzelnen Messung können Abtastfrequenz und damit Energieverbrauch deutlich gesenkt werden.

Ein weiterer Vorteil ist die Normierung der maximalen und minimalen Ausschwingzeiten, durch die die individuellen Abweichungen der Sensoren eliminiert werden. Dies gilt insbesondere dann, wenn gemäß einer vorteilhaften Weiterbildung der Erfindung die Normierungsschritte in zeitlichen Abständen wiederholt werden.

Aufgrund der Periodizität der trigonometrischen Gleichungen kommt es zu Wertesprüngen, wenn der Vektorwinkel die 360°-Schwelle überschreitet bzw. die 0°-Schwelle unterschreitet. Da die Drehrichtung des Rotors zwischen zwei Messungen zunächst unbekannt ist, kann beispielsweise eine negative Differenz der gemessenen Winkel sowohl durch eine Rückwärtsrotation oder durch einen Sprung über die 360°-Schwelle bei einer Vorwärtsrotation hervorgerufen sein. Es ist aber erwünscht, dass sicher festgestellt werden kann, wann eine volle Umdrehung des Rotors vorwärts oder rückwärts vollendet ist. Um dies zu erreichen, wird die tatsächliche Winkeldifferenz mit Hilfe der im Anspruch 2 genannten Gleichungen bestimmt. Mit der Ersten dieser Gleichungen wird verifiziert, dass kein Sprung über die Null-Linie, mit der Zweiten, dass ein Sprung über die Null-Linie in Vorwärtsrichtung, und mit der Dritten, dass ein Sprung über die Null-Linie in Rückwärtsrichtung aufgetreten ist. Der Kleinste der drei berechneten Werte B1, B2 oder B3 entspricht dem kürzest möglichen Winkelbogen, den der Rotor zwischen der vorigen und der aktuellen Messung zurückgelegt haben kann.

Um zu der mit den Gleichungen B1, B2 und B3 berechneten Bogenlänge des seit der letzten Abtastung zurückgelegten Drehwinkels auch die Drehrichtung zu ermitteln, werden mit Hilfe der Gleichungen C1, C2 und C3 aus Patentanspruch 2 das Vorzeichen und damit die Drehrichtung bestimmt. Positives Vorzeichen bedeutet Drehung vorwärts, negatives Vorzeichen bedeutet Drehung rückwärts.

Gemäß einer Weiterbildung der Erfindung kann die Abtastfrequenz reduziert werden, wenn der Betrag der Differenzwinkel eine erste Schwelle unterschreitet, und wieder erhöht werden, wenn der Betrag der Differenzwinkel eine zweite Schwelle überschreitet.

Vorzugsweise lässt sich die Erfindung einsetzen, bei Verwendung von zwei Sensoren im Winkelabstand von $\pi/2$ und einer zur Hälfte mit einem Dämpfungselement belegten Scheibe als Rotor.

In diesem Fall kann der aktuelle Winkel des aus den gemessenen und normierten Ausschwingzeiten gebildeten Vektors mittels der im Patentanspruch 6 genannten Funktionen errechnet werden.

Beschreibung der Zeichnungen:

Anhand der Zeichnung soll die Erfindung in Form von Ausführungsbeispielen näher erläutert werden. Es zeigen

Fig. 1    rein schematisch eine Anordnung zur Erfassung der Rotation eines zweidimensionalen Rotors,

Fig. 2    eine vereinfachte Darstellung des Ausschwingvorgangs eines unbedämpften Sensors,

Fig. 3    eine vereinfachte Darstellung des Ausschwingvorgangs des maximal bedämpften Sensors,

Fig. 4    die Auswertung der Rotation des in Fig. 1 dargestellten zweidimensionalen Rotors in einem zweidimensionalen, auf Werte zwischen +1 und -1 normierten ebenen Koordinatensystem,

Fig. 5    Position und Abfolge der Messzeitpunkte bei einem mit niederer Drehzahl rotierenden Rotor und

Fig. 6    Position und Abfolge der Messzeitpunkte bei einem mit höherer Drehzahl rotierenden Rotor.

Wege zur Ausführung der Erfindung und gewerbliche Verwertbarkeit:

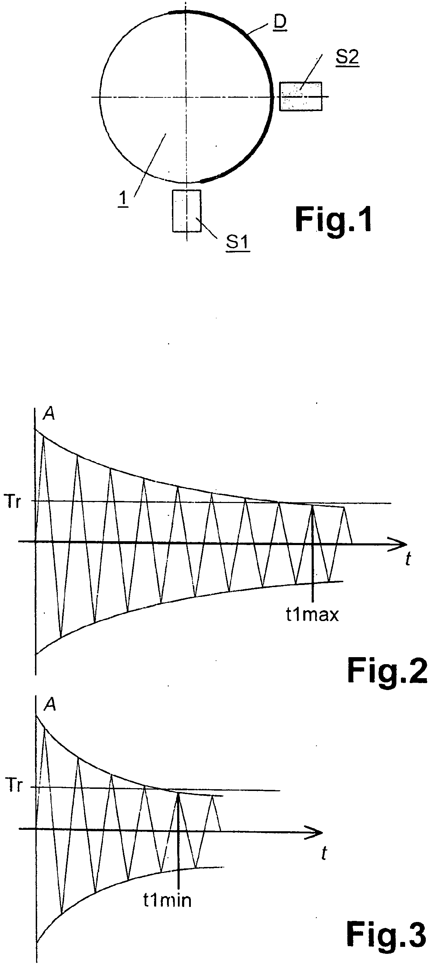

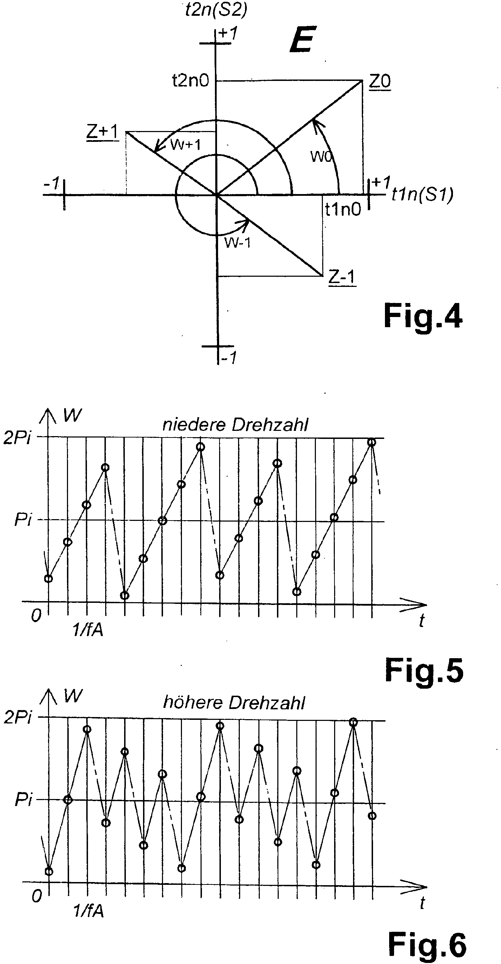

Fig. 1 zeigt rein schematisch einen Rotor 1 in Form einer Scheibe, die zur Hälfte mit einem Dämpfungselement D belegt ist. Mit geringem Abstand zum Rotor 1 und mit gegenseitigem Winkelabstand von $\pi/2$ sind zwei Sensoren S1, S2 angeordnet. Die Sensoren S1, S2 sind gebildet durch LC-Schwingkreise, die im Rhythmus einer Abtastfrequenz fA (siehe Fig. 6 und 7) zu Schwingungen angeregt werden. Die Ausschwingzeiten sind davon abhängig, ob sich das Dämpfungselement D ganz, teilweise oder gar nicht im Erfassungsbereich der Sensoren S1, S2 befindet.

Fig. 2 zeigt eine vereinfachte Darstellung der Ausschwingzeit des Sensors S1 im maximal unbedämpften Zustand. Die entsprechende maximal unbedämpfte Ausschwingzeit t1 max ist die Zeitspanne, bis die Amplitude A der Schwingungen unter eine vorgegebene Schaltschwelle Tr fällt.

Fig. 3 zeigt analog die Vorgänge bei maximal bedämpftem Sensor S1. Die Schaltschwelle Tr ist dieselbe wie in Fig. 2. Die minimale Ausschwingzeit t1 min ist erheblich kürzer als t1 max.

Fig. 4 zeigt ein zu dem Ausführungsbeispiel der Fig. 1 passendes zweidimensionales rechtwinkliges Koordinatensystem E. Die Wertebereiche der beiden Achsen sind auf Werte zwischen +1 und -1 normiert. Dabei entspricht der Wert +1 auf der Achse t1n(S1) dem Wert t1 max in Fig. 2, der Wert -1 dem Wert t1 min in Fig. 3.

Sinngemäß das Gleiche gilt für die Werte des zweiten Sensors S2 auf der mit t2n(S2) beschrifteten zweiten Achse.

Die in den Sensoren S1 und S2 tatsächlich gemessenen Werte liegen zwischen t1 max und t1min. Dank der Anwendung derselben Normierungsregeln liegen sie bei der Darstellung in der Fig. 4 zwischen +1 und -1. Aus aufeinander folgenden gemessenen und normierten Werten t1 n, t2n werden in dem Koordinatensystem E Vektoren $\underline{Z}$ gebildet und eingetragen.

In der Fig. 4 sind drei Vektoren $\underline{Z-1}$, $\underline{Z0}$ und $\underline{Z+1}$ eingetragen. Der Vektor $\underline{Z0}$ wird gebildet durch Vektoraddition des gemessenen und normierten Werts t1n0 des Sensors S1 und der gemessenen und normierten Komponente t2n0 des Sensors S2. Der aktuelle Vektorwinkel W0 kann durch die Gleichung W0 = arctan (t2n0/t1 n0) berechnet werden. Allgemein wird der Vektorwinkel W mittels der Formeln bestimmt:

$$B1 = |(W0)-(W-1)| \qquad C1 = signum((W0)-(W-1))$$
$$B2 = |(WO)-(W-1) +2\pi| \qquad C2 = signum((W0)-(W-1) +2\pi)$$
$$B3 = |(W0)-(W-1) -2\pi| \qquad C3 = signum((W0)-(W-1) -2\pi).$$

Dementsprechend wird der Vektorwinkel W+1 des nächstfolgenden Vektors $\underline{Z+1}$ berechnet, genauso wurde auch der Vektorwinkel W-1 des vorgegangenen Vektors Z-1 berechnet.

Wie Fig. 4 zeigt, ist der Vektorwinkel W0 des aktuellen Vektors Z0 kleiner als der Vektorwinkel W-1 des vorangegangenen Vektors Z-1. Es hat jedoch keine Drehung in Rückwärtsrichtung stattgefunden, sondern eine Drehung in Vorwärtsrichtung über die Null-Linie. Um die tatsächliche Drehrichtung und damit die Überquerung der Null-Linie bzw. die Vollendung einer vollen Umdrehung detektieren zu können, wird der Betrag der minimalen Winkeldifferenz ΔW zwischen Z-1 und Z0 bestimmt unter Verwendung folgender Gleichung:

$$|\Delta W| = \min\{|(W0)-(W-1)|, |(W0)-(W-1)+2\pi|, |(W0)-(W-1)-2\pi|\}$$

Es versteht sich, dass bei einer Rückwärtsdrehung des Rotors 1 beim Unterschreiten der Null-Linie der aktuelle Vektorwinkel deutlich größer sein wird als der vorangegangene Vektorwinkel. Auch hier wird durch die Auswahl des minimalen Werts von |ΔW| Klarheit geschaffen.

Die Fig. 5 und 6 zeigen Position und Anzahl der Abtastzeitpunkte im Rhythmus der Abtastfrequenz fA bei niederer Drehzahl (Fig. 5) und bei hoher Drehzahl (Fig. 6) für die Drehrichtung vorwärts.

Bei dem in Fig. 5 dargestellten Rotor mit niederer Drehzahl ergeben sich mehr Abtastzeitpunkte pro Umdrehung, bei dem in Fig. 6 dargestellten Rotor mit höherer Drehzahl ergeben sich weniger Abtastzeitpunkte pro Umdrehung. Des Weiteren erkennt man, dass die Vektorwinkel W sich nur zwischen 0° und 360° bzw. zwischen 0 und 2π bewegen. Die dadurch bedingte Mehrdeutigkeit der Messwerte kann jedoch, wie vorstehend dargelegt, durch die zusätzlichen Kriterien, nämlich Berechnung der minimalen Winkeldifferenz und des zugehörigen Signum-Wertes, eliminiert werden.

In jedem Fall kann die aktuelle Winkelposition des Rotors 1 und damit dessen Rotation nach vorwärts oder rückwärts mit hoher Sicherheit erfasst werden. Die Verarbeitung der mit erhöhter Auflösung bestimmten Winkel ermöglicht, dass auch mit wenigen Messpunkten pro Umdrehung, das heißt mit reduzierter Abtastfrequenz, die Drehungen und die Drehrichtungen des Rotors 1 mit hoher Sicherheit erfasst werden können. Mit dem erfindungsgemäßen Verfahren lässt sich die Abtastfrequenz gegenüber herkömmlichen Verfahren bei mindestens gleicher Zuverlässigkeit der Erfassung von Drehung und Drehrichtung fast halbieren.

**Patentansprüche**

1. Verfahren zum Detektieren der Drehung und der Drehrichtung (V, R) eines Rotors (1), umfassend

- Positionieren wenigstens eines Dämpfungselements (D) auf dem Rotor (1),
- Positionieren von zwei Sensoren (S1, S2), gebildet durch einen Schwingkreis, gegeneinander versetzt und mit geringem Abstand zu Rotor (1) und Dämpfungselement (D),
- Erzeugen einer Abtastfrequenz (fA),
- im Rhythmus der Abtastfrequenz (fA) periodisches kurzzeitiges Anregen der Sensoren (S1, S2) zu Schwingungen,
- Erfassen der Ausschwingzeiten (t1, t2) der Sensoren (S1, S2),
- Umwandeln der Ausschwingzeiten (t1, t2) in Drehwinkelpositionen des Rotors (1),
- Vergleichen aufeinanderfolgender Drehwinkelpositionen zur Ermittlung der Drehrichtung (V, R),
- Beobachten aufeinanderfolgender Drehwinkelpositionen zum Erkennen einer vollen Umdrehung,
**gekennzeichnet durch** die Merkmale:
- Durchführen einer Normierung **durch**

i. Ermitteln der maximalen Ausschwingzeit (t1 max) des ungedämpften ersten Sensors (S1),
ii. Ermitteln der minimalen Ausschwingzeit (t1min) des gedämpften ersten Sensors (S1),
iii. Normieren der maximalen Ausschwingzeit (t1 max) des ungedämpften ersten Sensors (S1) auf den Wert +1,
iv. Normieren der minimalen Ausschwingzeit (t1 min) des gedämpften ersten Sensors (S1) auf den Wert -1,
v. Wiederholen der Normierungsschritte für den weiteren Sensor (S2),

- und Durchführung von Messungen **durch**

i. Messen der aktuellen Ausschwingzeiten (t1, t2) der Sensoren (S1, S2) im Rhythmus der Abtastfrequenz (fA),
ii. Anwenden der Normierungsregeln auf die gemessenen Ausschwingzeiten (t1, t2) der Sensoren (S1, S2),

iii. Bilden eines Vektors (Z) aus den normierten Werten der gemessenen Ausschwingzeiten (t1n, t2n) und, ausgehend von dessen Nullpunkt, Eintragen des Vektors (Z) in ein Koordinatensystem (E), dessen Dimensionen der Zahl der verwendeten Sensoren (S1, S2) entspricht,

iv. Bestimmen des aktuellen Vektorwinkels (W0),

v. Vergleichen des aktuellen Vektorwinkels (W0) mit dem Wert eines geeigneten vorhergehenden Vektorwinkels (W-1)

vi. Bestimmen einer Drehung des Rotors (1)

vii. Bestimmen der Drehrichtung (V, R),

viii. und Wiederholen der Messungen im Rhythmus der Abtastfrequenz (fA).

2.  Verfahren nach Anspruch 1, **gekennzeichnet durch** die Merkmale:

- zum Bestimmen der Drehwinkeldifferenz ($\Delta$W) zwischen dem aktuellen Vektorwinkel (W0) und dem vorhergehenden Vektorwinkel (W-1) werden folgende Gleichungen berechnet:

$$B1 = |(W0)-(W-1)| \qquad C1 = signum((W0)-(W-1))$$
$$B2 = |(W0)-(W-1)+2\pi| \qquad C2 = signum((W0)-(W-1)+2\pi)$$
$$B3 = |(W0)-(W-1)-2\pi| \qquad C3 = signum((W0)-(W-1)-2\pi)$$

- der Betrag der tatsächlichen Drehwinkeldifferenz ($\Delta$W) zwischen der aktuellen und der vorhergehenden Messung ergibt sich aus derjenigen dieser drei Gleichungen (B1, B2, B3), die den minimalen Wert (= min (B1, B2, B3)) hat,

- die Drehrichtung des Vektors (Z) bzw. des Rotors (1) zwischen der aktuellen und der vorhergehenden Messung ergibt sich aus dem Signum derjenigen Gleichung C1, C2 oder C3, die zu der Gleichung B1, B2, B3 mit dem minimalen Wert gehört,

- ein positives Signum steht für vorwärts (V), ein negatives Signum für rückwärts (R).

3.  Verfahren nach Anspruch 2, **gekennzeichnet durch** das Merkmal:

- die tatsächliche Winkeldifferenz ergibt sich aus dem Produkt derjenigen Gleichung B1, B2 oder B3 mit dem minimalen Wert und dem zugehörigen Signum C1, C2 bzw. C3.

4.  Verfahren nach Anspruch 1, **gekennzeichnet durch** das Merkmal:

- Wiederholen der Normierung in zeitlichen Abständen.

5.  Verfahren nach wenigstens einem der Ansprüche 1 bis 4, **gekennzeichnet durch** das Merkmal:

- die Abtastfrequenz (fA) wird reduziert, wenn der Differenzwinkel |($\Delta$W)| eine erste Schwelle unterschreitet,

- die Abtastfrequenz (fA) wird wieder erhöht, wenn der Differenzwinkel |($\Delta$W)| eine zweite Schwelle überschreitet.

6.  Verfahren nach wenigstens einem der Ansprüche 1 bis 5, **gekennzeichnet durch** das Merkmal:

- Bestimmen des Vektorwinkels (W) mittels der Formeln

W = arctan (t2n/t1 n) wenn t1 n=>0 und t2n=>0,

W = arctan (t2n/t1 n)+ $\pi$ wenn t1n<0,

W = arctan (t2n/t1 n)+ 2$\pi$ wenn t1n=>0 und t2n<0.

7.  Verfahren nach wenigstens einem der Ansprüche 1 bis 6, **gekennzeichnet durch** das Merkmal:

- Verwenden einer Scheibe als Rotor (1).

**Claims**

1.  Method for detecting the rotation and the direction of rotation (V, R) of a rotor (1), comprising:

- positioning at least one damping element (D) on the rotor (1),
- positioning two sensors (S1, S2), formed by a resonant circuit, so as to be offset from one another and at a slight distance from the rotor (1) and the damping element (D),
- generating a scanning frequency (fA),
- stimulating the sensors (S1, S2), in a periodic manner and for a short period of time, to vibrate in the rhythm of the scanning frequency (fA),
- detecting the decay times (t1, t2) of the sensors (S1, S2),
- converting the decay times (t1, t2) into rotation angle positions of the rotor (1),
- comparing consecutive rotation angle positions to determine the direction of rotation (V, R),
- observing consecutive rotation angle positions to recognise a full revolution, **characterised by** the features of:
- carrying out a standardisation by:

    i. determining the maximum decay time (t1max) of the undamped first sensor (S1),
    ii. determining the minimum decay time (t1 min) of the damped first sensor (S1),
    iii. standardising the maximum decay time (t1 max) of the undamped first sensor (S1) to the value +1,
    iv. standardising the minimum decay time (t1 min) of the damped first sensor (S1) to the value -1,
    v. repeating the standardisation steps for the further sensor (S2),

and carrying out measurements by:

    i. measuring the current decay times (t1, t2) of the sensors (S1, S2) in the rhythm of the scanning frequency (fA),
    ii. applying the standardisation rules to the measured decay times (t1, t2) of the sensors (S1, S2),
    iii. forming a vector (Z) from the standardised values of the measured decay times (t1 n, t2n) and, starting from the zero point thereof, entering the vector (Z) into a coordinate system (E), the dimensions of which correspond to the number of sensors (S1, S2) used,
    iv. determining the current vector angle (W0),
    v. comparing the current vector angle (W0) to the value of a suitable preceding vector angle (W-1),
    vi. determining a rotation of the rotor (1),
    vii. determining the direction of rotation (V, R),
    viii. and repeating the measurements in the rhythm of the scanning frequency (fA).

2. Method according to claim 1, **characterised by** the following features:

    - to determine the rotation angle difference ($\Delta$W) between the current vector angle (W0) and the preceding vector angle (W-1), the following equations are calculated:

$$B1 = |(W0) - (W\text{-}1)| \qquad C1 = signum((W0) - (W - 1))$$
$$B2 = |(W0) - (W - 1) + 2\pi| \qquad C2 = signum((W0) - (W - 1) + 2\pi)$$
$$B3 = |(W0) - (W - 1) - 2\pi| \qquad C3 = signum((W0) - (W - 1) - 2\pi);$$

    - the amount of the actual rotation angle difference ($\Delta$W) between the current and the preceding measurement results from the equation of the three equations (B1, B2, and B3) that has the minimum value (= min (B1, B2, B3)),
    - the direction of rotation of the vector (Z) or of the rotor (1) between the current and the preceding measurement results from the signum of the equation C1, C2 or C3 that belongs to the equation B1, B2, B3 having the minimum value,
    - a positive signum stands for forwards (V) and a negative signum stands for backwards (R).

3. Method according to claim 2, **characterised by** the following feature:

    - the actual angular difference results from a product of the equation B1, B2 or B3 having the minimum value and the associated signum C1, C2 or C3.

4. Method according to claim 1, **characterised by** the following feature:

    - repeating the standardisation at time intervals.

**5.** Method according to at least one of claims 1 to 4, **characterised by** the following feature:

- the scanning frequency (fA) is reduced when the difference angle |(∆W)| falls below a first threshold,
- the scanning frequency (fA) is increased again when the difference angle |(∆W)| exceeds a second threshold.

**6.** Method according to at least one of claims 1 to 5, **characterised by** the following feature:

- determining the vector angle (W) by the formulas:

W=arctan (t2n/t1 n) when t1n $\geq$ 0 and t2n $\geq$ 0,
W=arctan (t2n/t1 n) + $\pi$ when t1n < 0,
W=arctan (t2n/t1 n) + 2$\pi$ when t1n $\geq$ 0 and t2n < 0.

**7.** Method according to at least one of claims 1 to 6, **characterised by** the following feature:

- using a disc as the rotor (1).

**Revendications**

**1.** Procédé pour détecter la rotation et le sens de rotation (V, R) d'un rotor (1), consistant à :

- positionner au moins un élément d'amortissement (D) sur le rotor (1),
- positionner deux capteurs (S1, S2), formés par un circuit oscillant, de façon décalée l'un par rapport à l'autre et à faible distance du rotor (1) et de l'élément d'amortissement (D),
- générer une fréquence d'échantillonnage (fA),
- faire osciller périodiquement brièvement les capteurs (S 1, S2) au rythme de la fréquence d'échantillonnage (fA),
- détecter les temps d'amortissement (t1, t2) des capteurs (S1, S2),
- convertir les temps d'amortissement (t1, t2) en positions angulaires de rotation du rotor (1),
- comparer des positions angulaires de rotation successives pour déterminer le sens de rotation (V, R),
- observer des positions angulaires de rotation successives pour reconnaître une révolution complète,
**caractérisé en ce que** :
- l'on effectue une normalisation en

    i. déterminant le temps d'amortissement maximum (t1max) du premier capteur (S1) non amorti,
    ii. déterminant le temps d'amortissement minimum (t1min) du premier capteur (S1) amorti,
    iii. normalisant le temps d'amortissement maximum (t1max) du premier capteur (S1) non amorti à la valeur +1,
    iv. normalisant le temps d'amortissement minimum (t1min) du premier capteur (S1) amorti à la valeur -1,
    v. répétant les étapes de normalisation pour l'autre capteur (S2),

- et l'on effectue des mesures en

    i. mesurant le temps d'amortissement actuel (t1, t2) des capteurs (S1, S2) au rythme de la fréquence d'échantillonnage (fA),
    ii. appliquant les règles de normalisation aux temps d'amortissement mesurés (t1, t2) des capteurs (S1, S2),
    iii. formant un vecteur (Z) à partir des valeurs normalisées des temps d'amortissement mesurés (t1n, t2n) et, en partant de son origine, reportant le vecteur (Z) dans un système de coordonnées (E) dont la dimension correspond au nombre de capteurs (S1, S2) utilisés,
    iv. déterminant l'angle vectoriel actuel (W0),
    v. comparant l'angle vectoriel actuel (W0) avec la valeur d'un angle vectoriel précédent approprié (W-1),
    vi. déterminant une rotation du rotor (1),
    vii. déterminant le sens de rotation (V, R)
    viii. et répétant les mesures au rythme de la fréquence d'échantillonnage (fA).

**2.** Procédé selon la revendication 1, **caractérisé en ce que** :

- pour déterminer la différence d'angle de rotation (∆W) entre l'angle vectoriel actuel (W0) et l'angle vectoriel précédent (W-1), on calcule les équations suivantes :

$$B1 = |(W0) - (W-1)| \qquad C1 = signe((W0) - (W-1))$$
$$B2 = |(W0) - (W-1) + 2\pi| \qquad C2 = signe((W0) - (W-1) + 2\pi)$$
$$B3 = |(W0) - (W-1) - 2\pi| \qquad C3 = signe((W0) - (W-1) - 2\pi)$$

- la valeur absolue de la différence d'angle de rotation effective ($\Delta W$) entre la mesure actuelle et la mesure précédente s'obtient à partir de celle de ces trois équations (B1, B2, B3) qui a la valeur minimum (= min (B1, B2, B3)),
- le sens de rotation du vecteur (Z) ou du rotor (1) entre la mesure actuelle et la mesure précédente s'obtient à partir du signe de l'équation C1, C2 ou C3 qui correspond à l'équation B1, B2, B3 qui a la valeur minimum,
- un signe positif représente en avant (V), un signe négatif en arrière (R).

3. Procédé selon la revendication 2, **caractérisé en ce que** :

- la différence d'angle effective s'obtient à partir du produit de l'équation B1, B2 ou B3 ayant la valeur minimum et du signe correspondant C1, C2 ou C3.

4. Procédé selon la revendication 1, **caractérisé en ce que** :

- la normalisation est répétée à intervalles réguliers.

5. Procédé selon au moins l'une des revendications 1 à 4, **caractérisé en ce que** :

- la fréquence d'échantillonnage (fA) est réduite lorsque l'angle différentiel $|(\Delta W)|$ devient inférieur à un premier seuil,
- la fréquence d'échantillonnage (fA) est de nouveau augmentée lorsque l'angle différentiel $|(\Delta W)|$ devient supérieur à un deuxième seuil.

6. Procédé selon au moins l'une des revendications 1 à 5, **caractérisé en ce que** :

- l'angle vectoriel (W) est déterminé à l'aide des formules
$W = arctan (t2n/t1n)$ si $t1n => 0$ et $t2n => 0$,
$W = arctan (t2n/t1n) + \pi$ si $t1n < 0$,
$W = arctan (t2n/t1n) + 2\pi$ si $t1n => 0$ et $t2n < 0$.

7. Procédé selon au moins l'une des revendications 1 à 6, **caractérisé en ce que** :

- l'on utilise un disque comme rotor (1).

**Fig.1**

**Fig.2**

**Fig.3**

**Fig.4**

**Fig.5**

**Fig.6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3340508 C2
- DE 10060198 A1
- DE 3611862 A1
- DE 3733943 A1
- DE 3733944 C2

- EP 0608494 B1
- EP 0467753 B1
- DE 3923398 C1
- DE 19809031 A1
- EP 0898152 A1